# EUROPÄISCHE PATENTANMELDUNG

(11) **EP 2 838 075 A1**
(43) Veröffentlichungstag der Anmeldung: **18.02.2015**
(21) Anmeldenummer: 13180504.6
(22) Anmeldetag: 15.08.2013
(51) Int. Cl.: G08G 1/054, G08G 1/017, H04L 9/00, H04L 9/14

(54) **Verfahren und Vorrichtung zur Erfassung von Überschreitungen einer zulässigen Höchstgeschwindigkeit auf einem Streckenabschnitt**

(71) Anmelder: VITRONIC Dr.-Ing. Stein Bildverarbeitungssysteme GmbH, 65189 Wiesbaden (DE)
(72) Erfinder: Hoffmann, Burghard, 65232 Taunusstein (DE)
(74) Vertreter: Müller, Thomas Michael

(57) **Zusammenfassung**

Verfahren zur Erfassung von Überschreitungen einer zulässigen Höchstgeschwindigkeit auf einem Steckenabschnitt 4 einer Fahrbahn 1, bei dem das Passieren eines Fahrzeugs 9 an einer ersten Station 5 detektiert wird und ein Datensatz zum Fahrzeug 9 in der ersten Station 5 gespeichert wird, das Passieren des besagten Fahrzeugs 9 an einer in Fahrtrichtung P hinter der ersten Station 5 angeordneten zweiten Station 6 detektiert wird und ein Datensatz zum Fahrzeug 9 in der zweiten Station 6 gespeichert wird, und anhand der Entfernung zwischen der ersten Station 5 und der zweiten Station 6 sowie der Zeitdifferenz zwischen dem Detektieren des Passierens der ersten Station 5 und dem Detektieren des Passierens der zweiten Station 6 die Durchschnittsgeschwindigkeit über den Streckenabschnitt 4 ermittelt wird, wobei Datensätze, die von der ersten Station 5 zur zweiten Station 6 übertragen werden, vor der Übertragung verschlüsselt werden und wobei nur diejenigen Datensätze aus den Stationen 5, 6 abrufbar sind und entschlüsselt werden können, die einer Überschreitung der zulässigen Höchstgeschwindigkeit zugeordnet wurden.

## Beschreibung

Die Erfindung betrifft ein Verfahren zur Erfassung von Überschreitungen einer zulässigen Höchstgeschwindigkeit auf einem Steckenabschnitt einer Fahrbahn, bei dem das Passieren eines Fahrzeugs an einer ersten Station detektiert wird und ein Datensatz zum Fahrzeug in der ersten Station gespeichert wird. Das Passieren des besagten Fahrzeugs an einer in Fahrtrichtung hinter der ersten Station angeordneten zweiten Station wird detektiert und es wird ein Datensatz zum Fahrzeug in der zweiten Station gespeichert. Anhand der Entfernung zwischen der ersten Station und der zweiten Station sowie der Zeitdifferenz zwischen dem Detektieren des Passierens der ersten Station und dem Detektieren des Passierens der zweiten Station wird die Durchschnittsgeschwindigkeit über den Streckenabschnitt zwischen der ersten Station und der zweiten Station ermittelt.

Ferner betrifft die Erfindung eine Vorrichtung zur Erfassung von Überschreitungen einer zulässigen Höchstgeschwindigkeit auf einem Streckenabschnitt einer Fahrbahn, wobei die Vorrichtung eine erste Station und eine zweite Station umfasst, die über einen Streckenabschnitt der Fahrbahn beabstandet zueinander angeordnet sind. Die erste Station umfasst eine erste Kamera und die zweite Station eine zweite Kamera. Ferner ist eine Datenverbindung zwischen den beiden Stationen vorgesehen.

Ein solches Verfahren und eine solche Vorrichtung sind aus der WO 2010/085931 A1 bekannt. Die Datensätze können zum Beispiel Bilder des Fahrzeugs, Kennzeichennummer und Bilder des Fahrers umfassen. Ein solches Verfahren und ein solches System ist zum Beispiel auch aus der EP 1 872 351 B1 bekannt. Das Speichern solcher Datensätze bzw. Informationen in den beiden Stationen ist in Staaten mit hohen rechtlichen Anforderungen an den Datenschutz nicht ohne weiteres gestattet.

Aufgabe der vorliegenden Erfindung ist es, ein Verfahren und eine Vorrichtung der eingangs genannten Art vorzuschlagen, bei denen eine missbräuchliche Verwendung der gespeicherten Informationen ausgeschlossen ist.

Die Aufgabe wird erfindungsgemäß durch ein Verfahren nach Anspruch 1 und eine Vorrichtung nach Anspruch 14 gelöst. Bevorzugte Ausführungsformen ergeben sich aus den abhängigen Ansprüchen.

Bei dem erfindungsgemäßen Verfahren ist vorgesehen, dass diejenigen Datensätze, die von der ersten Station zur zweiten Station übertragen werden, vor der Übertragung verschlüsselt werden, und dass nur diejenigen Datensätze aus den Stationen abrufbar sind und entschlüsselt werden können, die einer Überschreitung der zulässigen Höchstgeschwindigkeit zugeordnet wurden. Hierbei findet die Ermittlung der Durchschnittsgeschwindigkeit vorzugsweise in der zweiten Station statt.

Somit ist sichergestellt, dass die Datensätze, die datenschutzrelevante Informationen enthalten, stets verschlüsselt übertragen werden, so dass kein Missbrauch der Daten erfolgen kann. Die Entscheidung, ob Datensätze z.B. für eine Zentrale verfügbar gemacht werden, erfolgt in der zweiten Station nur dann, wenn eine Geschwindigkeitsüberschreitung vorliegt. Wird eine Geschwindigkeitsüberschreitung erkannt, so wird ein Falldatensatz erstellt und an eine Zentrale übermittelt. Die Zentrale dient zur Ahndung des Verstoßes und zur Überprüfung der (unverschlüsselten) Daten durch Personal. Eine Ausführung der Erfindung könnte auch die Funktionen der zweiten Station und der Zentrale in einer Einheit zusammenfassen.

Alle Datensätze, die in dem System aus erster Station und zweiter Station vorhanden sind, werden nur in flüchtigen Speichern gespeichert und gelöscht, wenn sie keiner Überschreitung der zulässigen Höchstgeschwindigkeit zugeordnet wurden. Die Zeitdauer der Speicherung endet, wenn die kleinste mögliche Zeitspanne abgelaufen ist, zu der noch eine Geschwindigkeitsüberschreitung hätte stattfinden können.

Vorzugsweise wird beim Passieren der ersten Station ein Bild des besagten Fahrzeugs aufgenommen und als erster Bilddatensatz in einem Speicher der ersten Station gespeichert. Ferner wird beim Passieren der ersten Station ein Identifikationsmerkmal des besagten Fahrzeugs erfasst und zusammen mit einem Aufnahmezeitpunkt des ersten Bildes als erster Identifikationsmerkmaldatensatz im Speicher der ersten Station gespeichert.

Der erste Bilddatensatz wird danach in der ersten Station sofort verschlüsselt und als verschlüsselter erster Bilddatensatz im ersten Speicher der ersten Station gespeichert. Der unverschlüsselte erste Bilddatensatz wird aus dem ersten Speicher der ersten Station gelöscht.

Darüber hinaus wird der erste Identifikationsmerkmaldatensatz des Fahrzeugs in der ersten Station verschlüsselt und als verschlüsselter erster Identifikationsmerkmaldatensatz im ersten Speicher der ersten Station gespeichert. Der unverschlüsselte erste Identifikationsmerkmaldatensatz wird aus dem ersten Speicher der ersten Station gelöscht.

Um eine Überschreitung der zulässigen Höchstgeschwindigkeit feststellen zu können, müssen die Identifikationsmerkmalsdatensätze in der zweiten Station vorliegen, um die Zeitdifferenz des Erfassens des ersten Identifikationsmerkmals und des zweiten Identifikationsmerkmals ermitteln zu können. Hierzu wird der verschlüsselte erste Identifikationsmerkmaldatensatz von der ersten Station zur zweiten Station übertragen, dort entschlüsselt im zweiten Speicher der zweiten Station gespeichert. Der verschlüsselte erste Identifikationsmerkmaldatensatz wird sodann aus dem ersten Speicher der ersten Station gelöscht.

Beim Passieren der zweiten Station wird ein zweites Bild des besagten Fahrzeugs aufgenommen und als zweiter Bilddatensatz in einem zweiten Speicher der zweiten Station gespeichert. Ferner wird beim Passieren der zweiten Station ein Identifikationsmerkmal des besagten Fahrzeugs erfasst und zusammen mit einem Aufnahmezeitpunkt des zweiten Bildes als zweiter Identifikationsmerkmaldatensatz im zweiten

Speicher der zweiten Station gespeichert.

Anhand des ersten Identifikationsmerkmaldatensatzes und des zweiten Identifikationsmerkmaldatensatzes wird die Durchschnittsgeschwindigkeit über den Streckenabschnitt zwischen der ersten Station und der zweiten Station ermittelt. Bei einer Überschreitung der zulässigen Höchstgeschwindigkeit auf dem Streckenabschnitt wird der verschlüsselte erste Bilddatensatz zum zugehörigen Identifikationsmerkmal von der ersten Station an die zweite Station übertragen und dort entschlüsselt und im zweiten Speicher gespeichert. Der verschlüsselte erste Bilddatensatz wird aus dem ersten Speicher der ersten Station gelöscht. Alternativ könnte die zweite Station die erste Station über die Datenverbindung auch auffordern, den ersten Bilddatensatz direkt an die Zentrale zu übertragen, was Übertragungsbandbreite einsparen würde.

Wie bereits oben erwähnt, kann nach Ablauf einer vorbestimmten Zeitspanne der verschlüsselte erste Bilddatensatz aus dem ersten Speicher der ersten Station gelöscht werden. Die vorbestimmte Zeitspanne entspricht hierbei der kürzesten Zeitspanne, die für eine Überschreitung der zulässigen Höchstgeschwindigkeit möglich ist.

Ferner kann vorgesehen werden, dass nach Ablauf der vorbestimmten Zeitspanne alle einem Identifikationsmerkmal zugeordneten Datensätze aus dem zweiten Speicher der zweiten Station, vorzugsweise aus den Speichern aller Stationen, gelöscht werden. Dadurch können auch bei einer Fehlparametrierung des Systems die Datenschutzanforderungen erfüllt werden.

Das Identifikationsmerkmal ist vorzugsweise die Kennzeichennummer des Fahrzeugs. Diese kann aus dem Bild des Bilddatensatzes des Fahrzeugs mittels Bilder-kennungsverfahren erkannt werden. Aus dem Bild des Fahrzeugs kann zudem eine hochauflösende Darstellung des Fahrers extrahiert werden.

Die Aufgabe wird ferner durch eine Vorrichtung zur Erfassung von Überschreitungen einer zulässigen Höchstgeschwindigkeit auf einem Streckenabschnitt einer Fahrbahn gelöst, wobei die Vorrichtung eine erste Station und eine zweite Station umfasst, die über einen Streckenabschnitt der Fahrbahn beabstandet zueinander angeordnet sind. Die Vorrichtung umfasst eine erste Kamera der ersten Station und eine zweite Kamera der zweiten Station, wobei jede Kamera ein versiegeltes Gehäuse aufweist, in dem ein Bildsensor sowie eine Computereinheit mit einem Speicher vorgesehen sind. Darüber hinaus ist eine Datenverbindung zwischen den Computereinheiten der beiden Stationen vorgesehen. Die Bildsensoren dienen zur Aufzeichnung der Bilder des Fahrzeugs, aus denen Bilddatensätze gebildet werden.

Vorzugsweise kann vorgesehen sein, dass als Speicher für die Kameras ausschließlich flüchtige Speicher vorgesehen sind, um ein dauerhaftes Speichern der datenschutzrechtlich sensiblen Daten zu vermeiden.

Die Kameras weisen vorzugsweise jeweils einen Cryptochip zum Verschlüsseln und Entschlüsseln von Datensätzen auf. In dem Cryptochip können Schlüssel zum Verschlüsseln und Entschlüsseln derart abgelegt sein, dass die Schlüssel nicht auslesbar sind.

Hierbei kann vorgesehen sein, dass in der Computereinheit der zweiten Kamera ein geheimer Schlüssel zum Entschlüsseln von Datensätzen unauslesbar gespeichert ist, und dass ein öffentlicher Schlüssel des geheimen Schlüssels zum Verschlüsseln von Datensätzen in der Computereinheit der ersten Kamera gespeichert ist.

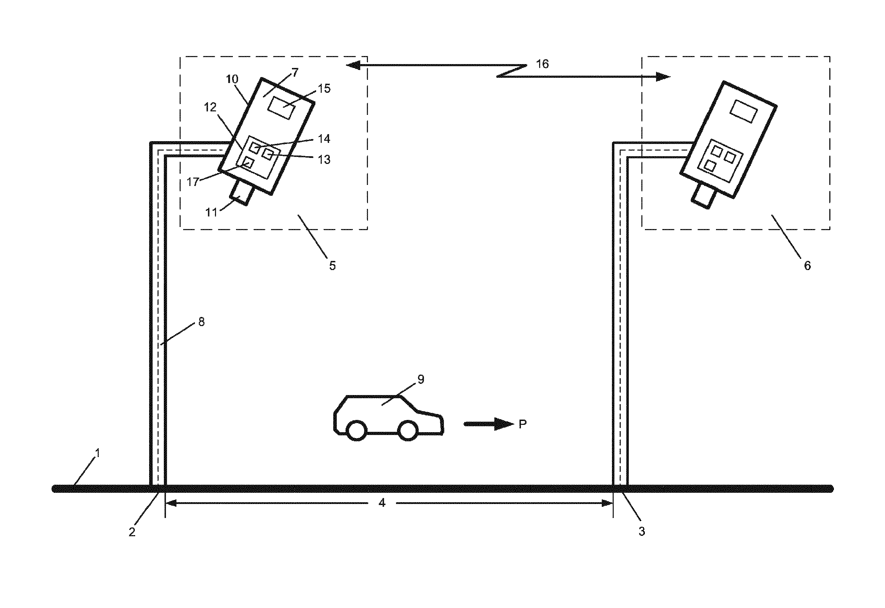

Eine erfindungsgemäße Ausführungsform wird im Folgenden anhand der Zeichnung näher erläutert.

Die Zeichnung zeigt hierbei eine nicht maßstabsgerechte Seitenansicht der erfindungsgemäßen Vorrichtung. Die Messstrecke ist üblicherweise zwischen 0,5 und 5 km lang. Andere Längen sind aber auch denkbar.

Gezeigt ist eine Fahrbahn 1 mit einer ersten Messstelle 2 und einer zweiten Messstelle 3. Die beiden Messstellen 2, 3 sind über einen Streckenabschnitt 4 beabstandet zueinander angeordnet. An der ersten Messstelle 2 befindet sich eine erste Station 5 und an der zweiten Messstelle 3 eine zweite Station 6. Die beiden Stationen 5, 6 sind identisch zueinander aufgebaut, wobei im Folgenden repräsentativ die erste Station 5 näher erläutert wird.

Die erste Station 5 umfasst eine erste Kamera 7, welche an einer ersten Brücke 8 befestigt ist. Die erste Brücke 8, ein sogenanntes Gantry, ist quer über der Fahrbahn 1 angeordnet, so dass ein Fahrzeug 9, welches sich auf der Fahrbahn 1 in einer Fahrtrichtung P bewegt, durch die erste Brücke 8 hindurchfahren kann.

Die Stationen 5, 6 weisen "intelligente" Kameras 7 auf, die bei der Eichung versiegelt werden. Die aufgespielte Software wir bei der Zulassung geprüft und mit einer Prüfsumme gesichert. Diese Prüfsumme wird bei der Eichung geprüft. Die Kameras 7 enthalten einen sogenannten Cryptochip, der Ver- und Entschlüsselungen nach einem PKCS (Public Key Crypto System) mit einem Schlüssel ausführen kann, der nicht auslesbar und geheim ist.

Bei der Verschlüsselung größerer Datenmengen wird üblicherweise eine Kombination aus symmetrischer und asymmetrischer Verschlüsselung verwendet. Der symmetrische Schlüssel wird als Sitzungsschlüssel (Session Key) bezeichnet und mit einem Zufallsgenerator erzeugt. Dieser wird dann mit dem asymmetrischen Verfahren verschlüsselt. Um also einen in der ersten Station 5 aufgenommenen Bild- oder Identifikationsmerkmaldatensatz unlesbar zu machen, reicht es, den Sitzungsschlüssel zusammen mit dem unverschlüsselten Originaldaten zu löschen.

Somit ist sicher gestellt, dass nur die zweite Station 6 die Möglichkeit hat, die Bilddatensätze zu entschlüsseln. Bei den Stationen 5, 6 handelt es sich um geschlossene, versiegelte System mit einer nicht manipulierbaren Software. Es lässt sich somit beweisen, dass nur dann Bilddatensätze die Stationen 5, 6 lesbar verlassen können, wenn ein Regelverstoß vorliegt. Es ist nur durch Bruch des Eichsiegels und dem Aufspielen einer manipulierten Software theoretisch möglich, die verschlüsselten Daten zu entschlüsseln und auszulesen.

Die erste Kamera 7 weist ein erstes Gehäuse 10 auf, in dem weitere Bauteile angeordnet sind. Das erste Gehäuse 10 ist derart gestaltet, dass es bei einer Eichung versiegelt werden kann. Das erste Gehäuse 10 ist somit gegen Öffnen durch ein Eichsiegel geschützt bzw. ist bei einer Öffnung des ersten Gehäuses 10 die Manipulation aufgrund eines gebrochenen Eichsiegels unmittelbar erkennbar.

In dem ersten Gehäuse 10 befindet sich ein erster Bildsensor 11 zum Aufnehmen eines ersten Bildes des Fahrzeugs 9 beim Passieren des Fahrzeugs 9 der ersten Station 5 bzw. beim Hindurchfahren durch die erste Brücke 8. Der erste Bildsensor 11 ist mit einer ersten Computereinheit 12 verbunden, die sich ebenfalls im ersten Gehäuse 10 befindet. Bestandteil der ersten Computereinheit 12 ist ein erster Cryptochip 13. Hierbei handelt es sich um einen Chip, der Verschlüsselungen von Datensätzen selbsttätig durchführen kann. Dabei wird ein Schlüssel verwendet, der nicht auslesbar ist und der bei der Fertigung des ersten Cryptochips 13 einprogrammiert wurde.

Ferner umfasst die erste Computereinheit 12 einen ersten Speicher 14, bei dem es sich vorzugsweise um einen flüchtigen Speicher (RAM, Random Access Memory) handelt, so dass Daten nicht zeitlich unbegrenzt gespeichert werden können und beim Ausschalten der Betriebsspannung verloren gehen.

In dem ersten Gehäuse 10 befindet sich darüber hinaus eine erste Kommunikationseinrichtung 15, welche mit der ersten Computereinheit 12 sowie mit einer Datenverbindung 16, mit der die erste Kommunikationseinrichtung 15 mit der zweiten Station 6 kommunizieren kann, verbunden ist. Bei der Datenverbindung 16 kann es sich um das Internet, eine Funkverbindung oder eine Kabelverbindung handeln. Zum Beispiel kann zur Herstellung einer Verbindung zum Internet der LTE-Standard (Long Term Evolution) verwendet werden.

Ferner umfasst die erste Computereinheit 12 eine erste Uhr 17, um Datensätze mit einem Zeitstempel für die Erfassung eines Aufnahmezeitpunkts versehen zu können.

Der Ablauf bei der ersten Station 5 sieht vor, dass beim Passieren des Fahrzeugs 9 eine Bildaufnahme gemacht wird, welche als erster Bilddatensatz abgelegt wird. Aus der Bildaufnahme wird die Kennzeichennummer des Fahrzeugs 9 erkannt, mit einem Zeitstempel versehen und als erster Identifikationsmerkmaldatensatz abgespeichert. Der erste Bilddatensatz und der erste Identifikationsmerkmaldatensatz werden jeweils mit einem öffentlichen Schlüssel der zweiten Station 6 verschlüsselt. Im Anschluss daran werden die unverschlüsselten Datensätze der Bildaufnahme und des Kennzeichens gelöscht. Daraufhin wird der verschlüsselte erste Identifikationsmerkmaldatensatz an die zweite Station 6 mittels der Kommunikationseinrichtungen 15 und der Datenverbindung 16 übertragen. Daraufhin wird auch der verschlüsselte erste Identifikationsmerkmaldatensatz in der ersten Station 5 gelöscht. Sobald die kürzeste legale Passagezeit abgelaufen ist, wird auch der verschlüsselte erste Bilddatensatz aus der ersten Station 5 gelöscht.

Der Ablauf der zweiten Station 6 sieht folgendermaßen aus, dass beim Passieren des Fahrzeuges 9 eine Bildaufnahme und eine Kennzeichenauslesung aus dem aufgenommenen Bild erfolgt. Die Bildaufnahme wird als zweiter Bilddatensatz gespeichert. Die Kennzeichennummer wird zusammen mit einem Zeitstempel als zweiter Identifikationsmerkmaldatensatz abgespeichert. Daraufhin werden die Kennzeichennummern der ersten Identifikationsmerkmaldatensätze durchsucht und mit den Kennzeichennummern der zweiten Identifikationsdatensätze verglichen. Um dies zu ermöglichen, wurden vorab die von der ersten Station 5 erhaltenen verschlüsselten ersten Identifikationsmerkmaldatensätze entschlüsselt. Sobald eine Übereinstimmung festgestellt wurde, wird die Passagezeit des Fahrzeugs 9 zwischen der ersten Messstelle 2 und der zweiten Messstelle 3 anhand der Zeitstempel der Identifikationsmerkmaldatensätze ermittelt. Sofern ein Verstoß, d.h. eine Überschreitung der zulässigen Höchstgeschwindigkeit, festgestellt wurde, wird von der ersten Station 5 der zugehörige verschlüsselte erste Bilddatensatz angefordert und nach Übertragung in der zweiten Station 6 entschlüsselt und zu einem Gesamtdatensatz zusammengefasst, um beweiskräftige Daten des Verstoßes zusammenzustellen. Diese können dann in einem weiteren Schritt so verschlüsselt werden, dass sie von der Zentrale gelesen und zur Ahndung des Verstoßes genutzt werden können. In dieser Form können die Daten dann von der Zentrale aus der zweiten Station 6 ausgelesen oder aktiv an die Zentrale gesendet werden.

Bei mehrspurigen Fahrbahnen können die Stationen auch mehrere Kameras enthalten, wobei jeder Fahrspur eine Kamera zugeordnet sein kann. In diesem Fall muss ein von einer Kamera 7 der ersten Station 5 erstellter Identifikationsmerkmaldatensatz mehrfach mit den unterschiedlichen öffentlichen Schlüsseln aller Kameras der zweiten Station 6 verschlüsselt und an diese übertragen werden.

### Bezugszeichenliste

- 1: Fahrbahn
- 2: erste Messstelle
- 3: zweite Messstelle
- 4: Streckenabschnitt
- 5: erste Station
- 6: zweite Station
- 7: erste Kamera
- 8: erste Brücke
- 9: Fahrzeug
- 10: erstes Gehäuse
- 11: erster Bildsensor
- 12: erste Computereinheit
- 13: erster Cryptochip
- 14: erster Speicher
- 15: erste Kommunikationseinrichtung
- 16: Datenverbindung
- 17: erste Uhr

- P: Fahrtrichtung

## Patentansprüche

1. Verfahren zur Erfassung von Überschreitungen einer zulässigen Höchstgeschwindigkeit auf einem Steckenabschnitt (4) einer Fahrbahn (1), bei dem das Passieren eines Fahrzeugs (9) an einer ersten Station (5) detektiert wird und ein Datensatz zum Fahrzeug (9) in der ersten Station (5) gespeichert wird, das Passieren des besagten Fahrzeugs (9) an einer in Fahrtrichtung (P) hinter der ersten Station (5) angeordneten zweiten Station (6) detektiert wird und ein Datensatz zum Fahrzeug (9) in der zweiten Station (6) gespeichert wird, und anhand der Entfernung zwischen der ersten Station (5) und der zweiten Station (6) sowie der Zeitdifferenz zwischen dem Detektieren des Passierens der ersten Station (5) und dem Detektieren des Passierens der zweiten Station (6) die Durchschnittsgeschwindigkeit über den Streckenabschnitt (4) ermittelt wird,
**dadurch gekennzeichnet,**
**dass** Datensätze, die von der ersten Station (5) zur zweiten Station (6) übertragen werden, vor der Übertragung verschlüsselt werden und
**dass** nur diejenigen Datensätze aus den Stationen (5, 6) abrufbar sind und entschlüsselt werden können, die einer Überschreitung der zulässigen Höchstgeschwindigkeit zugeordnet wurden.

2. Verfahren nach Anspruch 1,
**dadurch gekennzeichnet,**
**dass** in der zweiten Station (6) die Durchschnittsgeschwindigkeit über den Streckenabschnitt ermittelt wird.

3. Verfahren nach einem der vorangehenden Ansprüche,
**dadurch gekennzeichnet,**
**dass** diejenigen Datensätze in dem System aus erster Station (5) und zweiter Station (6) gelöscht werden, die keiner Überschreitung der zulässigen Höchstgeschwindigkeit zugeordnet wurden.

4. Verfahren nach einem der vorangehenden Ansprüche,
**dadurch gekennzeichnet,**
**dass** beim Passieren der ersten Station (5) ein erstes Bild des besagten Fahrzeugs (9) aufgenommen und als erster Bilddatensatz in einem ersten Speicher (14) der ersten Station (5) gespeichert wird und
**dass** beim Passieren der ersten Station (5) ein Identifikationsmerkmal des besagten Fahrzeugs (9) erfasst und zusammen mit einem Aufnahmezeitpunkt des ersten Bildes als erster Identifikationsmerkmaldatensatz im ersten Speicher (14) gespeichert wird.

5. Verfahren nach Anspruch 5,
**dadurch gekennzeichnet,**
**dass** der erste Bilddatensatz in der ersten Station (5) verschlüsselt wird und dass der verschlüsselte erste Bilddatensatz im ersten Speicher (14) gespeichert wird.

6. Verfahren nach einem der Ansprüche 3 oder 4,
**dadurch gekennzeichnet,**
**dass** der erste Identifikationsmerkmaldatensatz des Fahrzeugs (9) in der ersten Station (5) verschlüsselt wird und
**dass** der verschlüsselte erste Identifikationsmerkmaldatensatz im ersten Speicher (14) der ersten Station (5) gespeichert wird.

7. Verfahren nach Anspruch 5,
**dadurch gekennzeichnet,**
**dass** der verschlüsselte erste Identifikationsmerkmaldatensatz zur zweiten Station (6) übertragen und dort entschlüsselt und in einem zweiten Speicher gespeichert wird und
**dass** der verschlüsselte erste Identifikationsmerkmaldatensatz aus dem zweiten Speicher gelöscht wird.

8. Verfahren nach einem der Ansprüche 4 bis 6,
**dadurch gekennzeichnet,**
**dass** beim Passieren der zweiten Station (6) ein zweites Bild des besagten Fahrzeugs (9) aufgenommen und als zweiter Bilddatensatz in einem zweiten Speicher der zweiten Station (6) gespeichert wird und
**dass** beim Passieren der zweiten Station (6) ein Identifikationsmerkmal des besagten Fahrzeugs (9) erfasst und zusammen mit einem Aufnahmezeitpunkt des zweiten Bildes als zweiter Identifikationsmerkmaldatensatz im zweiten Speicher gespeichert wird.

9. Verfahren nach Anspruch 7,
**dadurch gekennzeichnet,**
**dass** anhand des ersten Identifikationsmerkmaldatensatzes und des zweiten Identifikationsmerkmaldatensatzes die Durchschnittsgeschwindigkeit über den Streckenabschnitt (4) zwischen der ersten Station (5) und der zweiten Station (6) ermittelt wird und
**dass** bei einer Überschreitung der zulässigen Höchstgeschwindigkeit auf dem Streckenabschnitt (4) der verschlüsselte erste Bilddatensatz zum zugehörigen Identifikationsmerkmal von der ersten Station (5) an die zweite Station (6) übertragen und dort entschlüsselt und in einem zweiten Speicher gespeichert wird und
**dass** der verschlüsselte erste Bilddatensatz aus dem ersten Speicher (14) der ersten Station (5) gelöscht wird.

10. Verfahren nach einem der Ansprüche 4 bis 8,
**dadurch gekennzeichnet,**
**dass** nach Ablauf einer vorbestimmten Zeitspanne der verschlüsselte erste Bilddatensatz aus dem ersten Speicher (14) der ersten Station (5) gelöscht wird.

11. Verfahren nach einem der Ansprüche 3 bis 9,
**dadurch gekennzeichnet,**
**dass** nach Ablauf einer vorbestimmten Zeitspanne alle einem Identifikationsmerkmal zugeordneten Datensätze aus dem zweiten Speicher der zweiten Station (6) gelöscht werden.

12. Verfahren nach einem der Ansprüche 3 bis 10,
**dadurch gekennzeichnet,**
**dass** das Identifikationsmerkmal die Kennzeichennummer des Fahrzeugs (9) ist.

13. Verfahren nach Anspruch 11,
**dadurch gekennzeichnet,**
**dass** die Kennzeichennummer im Bild des Fahrzeugs (9) erkannt wird.

14. Vorrichtung zur Erfassung von Überschreitungen einer zulässigen Höchstgeschwindigkeit auf einem Streckenabschnitt (4) einer Fahrbahn (1), wobei die Vorrichtung folgendes umfasst:
eine erste Station (5) und eine zweiten Station (6), die über einen Streckenabschnitt (4) der Fahrbahn (1) beabstandet zueinander angeordnet sind,
eine erste Kamera (7) der ersten Station (5) und eine zweite Kamera der zweiten Station (6), wobei jede Kamera (7) ein versiegeltes Gehäuse (10) aufweist,
in dem ein Bildsensor (11) sowie eine Computereinheit (12) mit einem Speicher (14) vorgesehen sind, sowie
eine Datenverbindung (16) zwischen den Computereinheiten (12) der beiden Stationen (5, 6).

15. Vorrichtung nach Anspruch 13,
**dadurch gekennzeichnet,**
**dass** als Speicher (14) für die Kameras (7) ausschließlich flüchtige Speicher (RAM) vorgesehen sind.

16. Vorrichtung nach einem der Ansprüche 13 oder 14,
**dadurch gekennzeichnet,**
**dass** die Kameras (7) jeweils einen Cryptochip (13) zum Verschlüsseln und Entschlüsseln von Datensätzen aufweisen.

17. Vorrichtung nach einem der Ansprüche 13 bis 15,
**dadurch gekennzeichnet,**
**dass** in der Computereinheit der zweiten Kamera ein geheimer Schlüssel zum Entschlüsseln von Datensätzen unauslesbar gespeichert ist und
**dass** ein öffentlicher Schlüssel des geheimen Schlüssels zum Verschlüsseln von Datensätzen in der Computereinheit (12) der ersten Kamera (7) gespeichert ist.

## Geänderte Patentansprüche

### Geänderte Patentansprüche gemäss Regel 137(2) EPÜ.

1. Verfahren zur Erfassung von Überschreitungen einer zulässigen Höchstgeschwindigkeit auf einem Streckenabschnitt (4) einer Fahrbahn (1), bei dem das Passieren eines Fahrzeugs (9) an einer ersten Station (5) detektiert und beim Passieren der ersten Station (5) ein erstes Bild des besagten Fahrzeugs (9) aufgenommen und als erster Bilddatensatz in einem ersten Speicher (14) der ersten Station (5) gespeichert wird, und
beim Passieren der ersten Station (5) ein Identifikationsmerkmal des besagten Fahrzeugs (9) erfasst und zusammen mit einem Aufnahmezeitpunkt des ersten Bildes als erster Identifikationsmerkmaldatensatz im ersten Speicher (14) gespeichert wird,
das Passieren des besagten Fahrzeugs (9) an einer in Fahrtrichtung (P) hinter der ersten Station (5) angeordneten zweiten Station (6) detektiert wird und beim Passieren der zweiten Station (6) ein zweites Bild des besagten Fahrzeugs (9) aufgenommen und als zweiter Bilddatensatz in einem zweiten Speicher der zweiten Station (6) gespeichert wird, und
beim Passieren der zweiten Station (6) ein Identifikationsmerkmal des besagten Fahrzeugs (9) erfasst und zusammen mit einem Aufnahmezeitpunkt des zweiten Bildes als zweiter Identifikationsmerkmaldatensatz im zweiten Speicher gespeichert wird,
Datensätze, die von der ersten Station (5) zur zweiten Station (6) übertragen werden, vor der Übertragung verschlüsselt werden,
der erste Identifikationsmerkmaldatensatz von der ersten Station (5) verschlüsselt an die zweite Station (6) übertragen wird, und
anhand der Entfernung zwischen der ersten Station (5) und der zweiten Station (6) sowie der Zeitdifferenz zwischen dem Aufnahmezeitpunkt des ersten Bildes des ersten Identifikationsmerkmaldatensatzes und dem Aufnahmezeitpunkt des zweiten Bildes des zweiten Identifikationsmerkmaldatensatzes die Durchschnittsgeschwindigkeit über den Streckenabschnitt (4) zwischen der ersten Station (5) und der zweiten Station (6) ermittelt wird, wobei
bei einer Überschreitung der zulässigen Höchstgeschwindigkeit auf dem Streckenabschnitt (4) der verschlüsselte erste Bilddatensatz zum zugehörigen Identifikationsmerkmal von der ersten Station (5) an die zweite Station (6) übertragen und dort entschlüsselt und in dem zweiten Speicher gespeichert wird oder die zweite Station (6) die erste Station (5) über eine Datenverbindung auffordert, den ersten Bilddatensatz direkt an eine Zentrale zu übertragen, und der verschlüsselte erste Bilddatensatz aus dem ersten Speicher (14) der ersten Station (5) gelöscht wird,
wobei nur diejenigen Bilddatensätze und zugehörigen Identifikationsmerkmaldatensätze aus der zweiten Station (6) abrufbar sind und entschlüsselt werden können, die einer Überschreitung der zulässigen Höchstgeschwindigkeit zugeordnet wurden.

2. Verfahren nach Anspruch 1,
**dadurch gekennzeichnet,**
**dass** in der zweiten Station (6) die Durchschnittsgeschwindigkeit über den Streckenabschnitt ermittelt wird.

3. Verfahren nach einem der vorangehenden Ansprüche,
**dadurch gekennzeichnet,**
**dass** diejenigen Datensätze in dem System aus erster Station (5) und zweiter Station (6) gelöscht werden, die keiner Überschreitung der zulässigen Höchstgeschwindigkeit zugeordnet wurden.

4. Verfahren nach Anspruch 1,
**dadurch gekennzeichnet,**
**dass** der erste Bilddatensatz in der ersten Station (5) verschlüsselt wird und dass der verschlüsselte erste Bilddatensatz im ersten Speicher (14) gespeichert wird.

5. Verfahren nach einem der Ansprüche 3 oder 4,
**dadurch gekennzeichnet,**
**dass** der erste Identifikationsmerkmaldatensatz des Fahrzeugs (9) in der ersten Station (5) verschlüsselt wird und dass der verschlüsselte erste Identifikationsmerkmaldatensatz im ersten Speicher (14) der ersten Station (5) gespeichert wird.

6. Verfahren nach Anspruch 5,
**dadurch gekennzeichnet,**
**dass** der verschlüsselte erste Identifikationsmerkmaldatensatz zur zweiten Station (6) übertragen und dort entschlüsselt und in einem zweiten Speicher gespeichert wird und dass der verschlüsselte erste Identifikationsmerkmaldatensatz aus dem ersten Speicher gelöscht wird.

7. Verfahren nach einem der Ansprüche 1 oder 4 bis 6,
**dadurch gekennzeichnet,**
**dass** nach Ablauf einer vorbestimmten Zeitspanne der verschlüsselte erste Bilddatensatz aus dem ersten Speicher (14) der ersten Station (5) gelöscht wird.

8. Verfahren nach einem der Ansprüche 1 oder 3 bis 7,
**dadurch gekennzeichnet,**
**dass** nach Ablauf einer vorbestimmten Zeitspanne alle einem Identifikationsmerkmal zugeordneten Datensätze aus dem zweiten Speicher der zweiten Station (6) gelöscht werden.

9. Verfahren nach einem der Ansprüche 1 oder 3 bis 8,
**dadurch gekennzeichnet,**
**dass** das Identifikationsmerkmal die Kennzeichennummer des Fahrzeugs (9) ist.

10. Verfahren nach Anspruch 9,
**dadurch gekennzeichnet,**
**dass** die Kennzeichennummer im Bild des Fahrzeugs (9) erkannt wird.

11. Vorrichtung zur Erfassung von Überschreitungen einer zulässigen Höchstgeschwindigkeit auf einem Streckenabschnitt (4) einer Fahrbahn (1) zur Durchführung eines Verfahrens nach einem der vorherigen Ansprüche, wobei die Vorrichtung folgendes umfasst:
eine erste Station (5) und eine zweiten Station (6), die über einen Streckenabschnitt (4) der Fahrbahn (1) beabstandet zueinander angeordnet sind,
eine erste Kamera (7) der ersten Station (5) und eine zweite Kamera der zweiten Station (6), wobei jede Kamera (7) ein versiegeltes Gehäuse (10) aufweist,
in dem ein Bildsensor (11) sowie eine Computereinheit (12) mit einem Speicher (14) vorgesehen sind, sowie
eine Datenverbindung (16) zwischen den Computereinheiten (12) der beiden Stationen (5, 6).

12. Vorrichtung nach Anspruch 11,
**dadurch gekennzeichnet,**
**dass** als Speicher (14) für die Kameras (7) ausschließlich flüchtige Speicher (RAM) vorgesehen sind.

13. Vorrichtung nach einem der Ansprüche 11 oder 12,
**dadurch gekennzeichnet,**
**dass** die Kameras (7) jeweils einen Cryptochip (13) zum Verschlüsseln und Entschlüsseln von Datensätzen aufweisen.

14. Vorrichtung nach einem der Ansprüche 11 bis 13,
**dadurch gekennzeichnet,**
**dass** in der Computereinheit der zweiten Kamera ein geheimer Schlüssel zum Entschlüsseln von Datensätzen unauslesbar gespeichert ist und
**dass** ein öffentlicher Schlüssel des geheimen Schlüssels zum Verschlüsseln von Datensätzen in der Computereinheit (12) der ersten Kamera (7) gespeichert ist.
